# FASCICULE DE BREVET EUROPEEN

(11) **EP 0 624 940 B1**
(45) Date de publication et mention de la délivrance du brevet: **26.03.1997**
(21) Numéro de dépôt: 94401056.0
(22) Date de dépôt: 11.05.1994
(51) Int. Cl.: H02G 3/04

(54) **Goulotte à joint de couvercle équipé d'un verrou, notamment pour appareillages électriques**
Rinne mit einer Abdeckungsverbindung mit Verriegelungsvorrichtung, insbesondere für elektrische Geräte
Trunking with a cover joint device equipped with a fastener, especially for electrical apparatus

(30) Priorité: 14.05.1993 FR 9305854
(43) Date de publication de la demande: 17.11.1994
(73) Titulaire: LEGRAND, F-87045 Limoges Cédex (FR); LEGRAND SNC, F-87045 Limoges (FR)
(72) Inventeur: Decore, Bertrand, F-72650 La Chapelle Saint Aubin (FR)
(74) Mandataire: CABINET BONNET-THIRION

(56) Documents cités:
- EP-A- 0 382 597
- EP-A- 0 409 806
- EP-A- 0 414 616
- GB-A- 893 636

## Description

La présente invention concerne d'une manière générale les goulottes, notamment pour appareillages électriques, du genre comportant, d'une part, un corps à retours dirigés l'un vers l'autre, et, d'autre part, un couvercle à rapporter sur ce corps.

Elle vise aussi bien le cas où, les retours correspondants du corps appartenant directement à celui-ci, en étant portés par ses ailes latérales, le couvercle s'étend de l'une à l'autre de ces ailes latérales, en fermant à lui seul la totalité du corps, que le cas où, l'un et/ou l'autre de ces retours étant portés par une cloison interne du corps, qu'il s'agisse d'une cloison fixe ou d'une cloison amovible comme décrit par exemple dans le brevet français n° 89 01534 publié sous le n° 2 642 911, le couvercle ne s'étend que d'une de ces ailes latérales à une de ces cloisons, ou d'une telle cloison à une autre, en ne fermant alors à lui seul qu'une partie du corps.

Par mesure de simplicité, il sera supposé dans ce qui suit que les retours concernés appartiennent dans tous les cas au corps, même s'ils sont portés par une cloison interne amovible de celui-ci.

La présente invention vise plus précisément le cas où, pour que le couvercle puisse être ainsi rapporté sur le corps, il est prévu, entre ce couvercle et ce corps, des moyens d'encliquetage.

Par exemple, les retours du corps sont globalement conformés en gouttière, et le couvercle présente à son dos deux cordons propres à son encliquetage dans ces retours, c'est-à-dire dans la gouttière que forment ceux-ci.

Quoi qu'il en soit, si, du fait même des moyens d'encliquetage ainsi mis en oeuvre, la pose du couvercle sur le corps peut avantageusement se faire par simple engagement à force, il n'en est pas de même de sa dépose, le couvercle n'offrant par lui-même pratiquement plus aucune prise lorsqu'il est posé sur le corps.

Or, une telle dépose peut s'avérer nécessaire, par exemple pour la maintenance des appareillages électriques concernés ou la modification de l'installation.

L'opérateur doit alors s'aider d'un tournevis, en insérant la lame de celui-ci dans l'interstice existant inévitablement entre l'un des bords longitudinaux du couvercle et le retour correspondant du corps, et en prenant appui sur ce dernier pour soumettre par effet de levier le couvercle à un effort d'extraction.

Ce faisant, il est avantageusement satisfait à certaines normes en la matière, qui, pour des raisons de sécurité, prennent en compte la nécessité de faire appel ou non à un outil pour la dépose du couvercle.

Mais l'usage ainsi fait d'un tournevis ne manque pas de blesser le corps et/ou le couvercle, en laissant des traces sur l'un et/ou sur l'autre de ceux-ci, au détriment de l'esthétique de l'ensemble.

La présente invention a d'une manière générale pour objet une disposition permettant d'éviter cet inconvénient, qui est d'autant plus gênant que, au cours de la durée normale d'utilisation d'une goulotte, plusieurs déposes du couvercle peuvent devoir intervenir.

De manière plus précise, elle a pour objet une goulotte comportant, d'une part, un corps à retours dirigés l'un vers l'autre, et, d'autre part, un couvercle à encliqueter sur ces retours, cette goulotte étant d'une manière générale caractérisée en ce qu'elle comporte également un joint de couvercle, qui s'étend transversalement de l'un à l'autre des retours du corps, pour recouvrement de l'extrémité du couvercle, et qui, à l'une de ses extrémités, au moins, est équipé d'un verrou comportant un pêne, ledit verrou étant monté mobile entre une position de verrouillage, pour laquelle le pêne est engagé sous le retour correspondant du corps, et une position de déverrouillage, pour laquelle le pêne est à l'écart de ce retour.

Par exemple, et préférentiellement, le verrou est monté rotatif sur le joint de couvercle, en présentant à la surface de celui-ci une tête de commande accessible à l'usager, et son pêne est une simple plaquette qui s'étend radialement en porte-à-faux à compter de son fût.

Pour la dépose du couvercle, il suffit de procéder à une dépose préalable du joint de couvercle.

En effet, l'espace alors dégagé est suffisant pour permettre à l'opérateur d'introduire un ou plusieurs doigts sous le couvercle et d'appliquer ainsi, ensuite, à celui-ci, l'effet d'extraction nécessaire.

Il n'en résulte avantageusement aucune blessure ni pour le corps, ni pour le couvercle.

L'actionnement du verrou du joint de couvercle nécessitant en pratique la mise en oeuvre d'un outil, en l'espèce un simple tournevis, les normes en la matière se trouvent corollairement avantageusement satisfaites.

Les caractéristiques et avantages de 1' invention ressortiront d'ailleurs de la description qui va suivre, à titre d'exemple, en référence aux dessins schématiques annexés sur lesquels :
La figure 1 est une vue partielle en perspective d'une goulotte comportant un joint de couvercle suivant l'invention;
La figure 2 est une vue partielle en perspective qui, analogue à celle de la figure 1, illustre la pose de ce joint de couvercle ;
La figure 3 est, à échelle supérieure, et avec un arrachement local, une vue en perspective de ce joint de couvercle, vu de l'arrière, et du verrou dont il est équipé, avant le montage de ce verrou sur ce joint de couvercle ;
La figure 4 est, à l'échelle de la figure 3, une vue en perspective de ce verrou, vu de l'avant ;
La figure 5 est, à échelle encore supérieure, une vue en coupe longitudinale du joint de couvercle et de son verrou suivant la ligne V-V de la figure 3, et, donc, avant montage du verrou ;
La figure 6 est une vue en coupe transversale, suivant la ligne VI-VI de la figure 5 ;
La figure 7 est une vue partielle en coupe transversale du joint de couvercle suivant la ligne VII-VII de la figure 5 ;
La figure 8 est de manière semblable, une vue partielle en coupe transversale du verrou, suivant la ligne VIII-VIII de la figure 4 ;
La figure 9 est une vue partielle en coupe longitudinale qui reprend pour partie celle de la figure 5, après montage du verrou sur le joint de couvercle ;
Les figures 10 et 11 sont, à échelle inférieure, des vues en perspectives qui, déduites de celle de la figure 3, illustrent chacune respectivement deux modes différents de fractionnement du joint de couvercle pour son adaptation à deux largeurs différentes du couvercle.

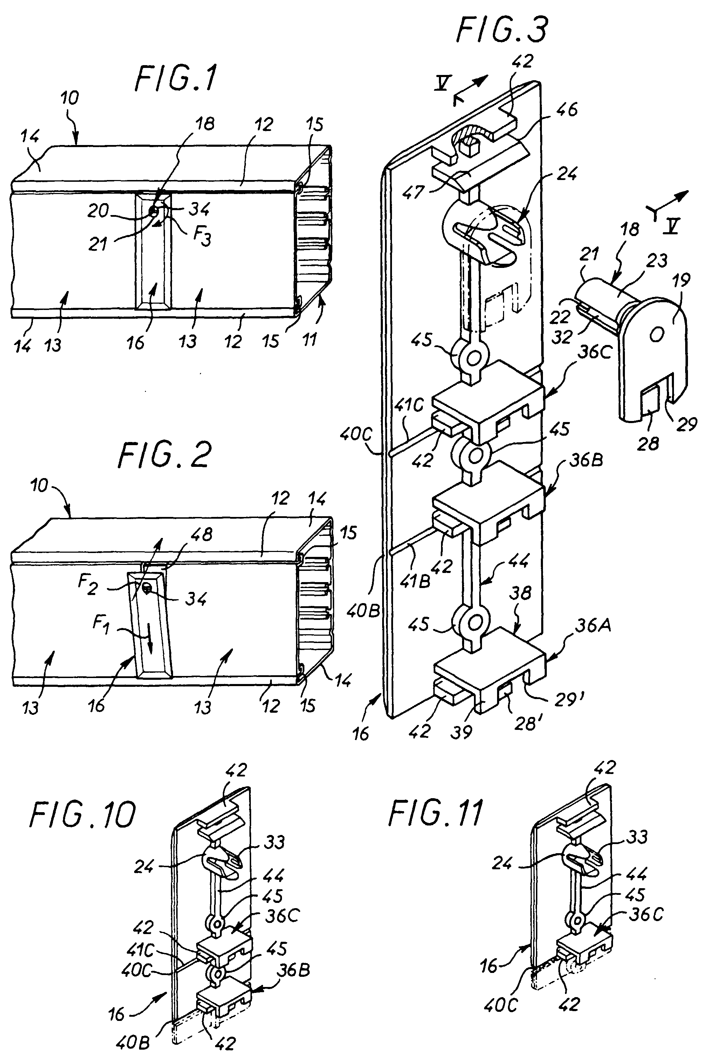

Tel qu'illustré sur ces figures, et plus particulièrement sur les figures 1 et 2, il s'agit de l'équipement d'une goulotte 10 comportant, globalement, d'une part, un corps 11 à retours 12 dirigés l'un vers l'autre, et, d'autre part, un couvercle 13, à encliqueter sur ces retours 12.

Dans la forme de réalisation représentée, le couvercle 13 est fractionné en deux tronçons, tout se passant comme si deux couvercles 13 étaient ainsi à échelonner le long du corps 11.

Mais, dans ce qui suit, et pour plus de simplicité, il ne sera le plus souvent fait mention que d'un seul couvercle 13.

Le corps 11 est bien connu par lui-même, et, ne relevant pas de la présente invention, il ne sera pas décrit dans tous ses détails ici.

Il en est de même en ce qui concerne le couvercle 13. Seuls seront décrits dans ce qui suit les éléments du corps 11 et/ou du couvercle 13 nécessaires à la compréhension de l'invention.

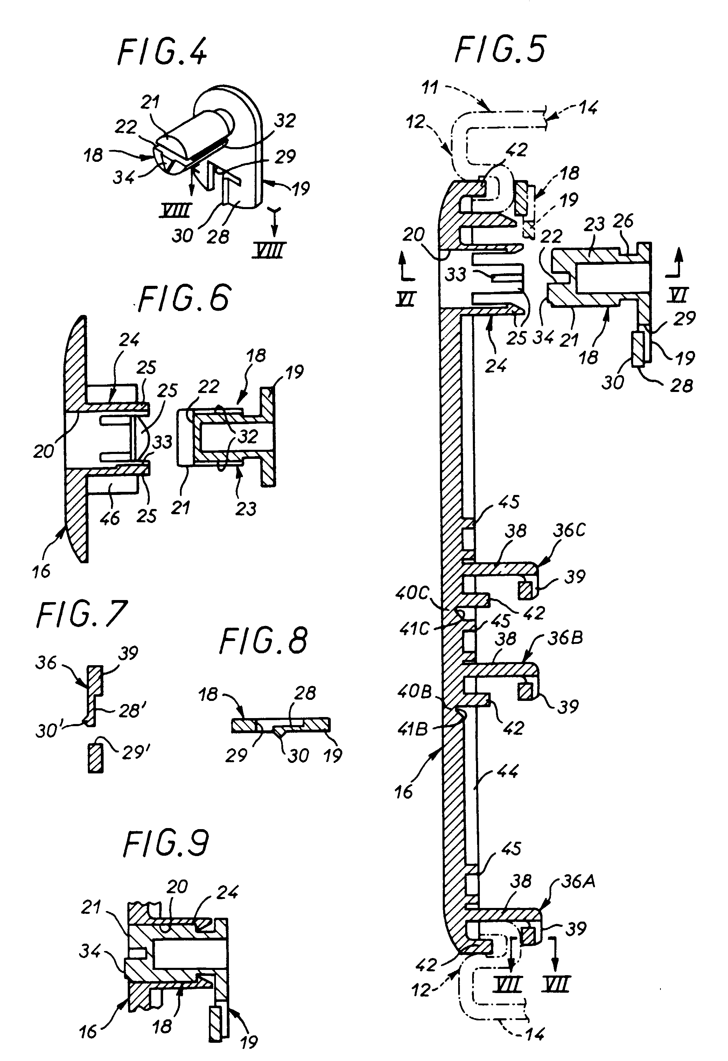

Il suffira à ce sujet d'indiquer que, dans la forme de réalisation représentée, le corps 11 a, globalement, en section transversale, un profil en U, que ses retours 12 sont portées par ses ailes latérales 14, en s'étendant à un même niveau le long du bord libre de celles-ci, et que, ainsi qu'il est mieux visible en traits interrompus sur la figure 5, ces retours 12 sont chacun individuellement globalement conformés en gouttière.

Conjointement, dans cette forme de réalisation, le couvercle 13 s'étend de l'une à l'autre des ailes latérales 14 du corps 11, et, pour son encliquetage dans la gouttière des retours 12 de celui-ci, il présente, en saillie à son dos, deux cordons 15.

Suivant l'invention, la goulotte 10 comporte également un joint de couvercle 16, qui s'étend transversalement de l'un à l'autre des retours 12 du corps 11, pour recouvrement de l'extrémité du couvercle 13, et qui, à l'une de ses extrémités, au moins, est équipé d'un verrou 18 comportant un pêne 19, ce verrou 18 étant mobile entre une position de verrouillage, qui est schématisée en traits interrompus sur la figure 5, et pour laquelle le pêne 19 est engagé sous le retour 12 correspondant du corps 11, et une position de verrouillage, qui correspond à celle représentée en traits continus sur la figure 5, et pour laquelle le pêne 19 est à l'écart de ce retour 12.

Globalement, le joint de couvercle 16 se présente sous la forme d'une plaquette de contour rectangulaire.

Dans la forme de réalisation représentée, le verrou 18 est monté rotatif sur le joint de couvercle 16 et présente, à la surface de celui-ci, à la faveur d'une ouverture 20, de contour circulaire, prévue à cet effet dans ce joint de couvercle 16, une tête de commande 21 accessible à l'usager.

Pour sa commande à l'aide d'un tournevis, cette tête de commande 21 présente diamétralement une saignée 22, à la manière de la tête d'une vis.

Globalement, le verrou 18 comporte un fût cylindrique 23, de contour circulaire, dont l'extrémité libre forme la tête de commande 21, et par ce fût cylindrique 23, il est encliqueté axialement à rotation dans un puits 24 qui, en continuité avec l'ouverture 20, fait saillie à cet effet au dos du joint de couvercle 16.

Dans la forme de réalisation représentée, ce puits 24 est fractionné suivant des génératrices en pattes 25 élastiquement déformables, et, pour l'encliquetage axial du verrou 18, certaines au moins de ces pattes 25, en l'espèce deux pattes 25 disposées en positions diamétralement opposées l'une par rapport à l'autre, sont conformées en crochet.

Conjointement, pour coopération avec les pattes 25 ainsi conformées en crochet, le fût 23 du verrou 18 présente, annulairement, à son raccordement avec le pêne 19, une gorge 26.

Dans la forme de réalisation représentée, le pêne 19 du verrou 18 est une simple plaquette qui s'étend radialement en porte-à-faux à compter de son fût 23, à l'extrémité de celui-ci opposée à sa tête de commande 21.

En outre, dans cette forme de réalisation, ce pêne 19 comporte, pour coopération avec un retour 12 du corps 11, une lamelle élastiquement déformable 28.

En pratique, cette lamelle élastiquement déformable 28 s'étend à la faveur d'un échancrure 29 du pêne 19, sensiblement suivant l'épaisseur de celui-ci, tout en présentant par elle-même une épaisseur moindre, et, pour porter contre un retour 12 du corps 11, au dos de la partie conformée en gouttière de ce retour 12, elle présente transversalement en saillie un bourrelet 30.

Par exemple, et tel que représenté, ce bourrelet 30 a, en section transversale, un profil triangulaire.

Préférentiellement, et tel que représenté, des moyens d'indexation sont prévus entre le verrou 18 et le joint de couvercle 16, pour l'une au moins des positions du verrou 18.

Dans la forme de réalisation représentée, ces moyens d'indexation comportent, sur le verrou 18, deux saignées 32, qui, en positions diamétralement opposées l'une par rapport à l'autre, affectent suivant des génératrices son fût 23, entre la saignée 22 de sa tête de commande 21 et la gorge 26 de son fût 23, et, sur l'une des pattes 25 du puits 24 du joint de couvercle 16, en l'espèce l'une des pattes 25 intermédiaires entre celles conformées en crochet, une nervure 33 complémentaire, figure 6.

Préférentiellement également et tel que présenté, la tête de commande 21 du verrou 18 porte un repère 34 à l'image de l'implantation du pêne 19.

Dans la forme de réalisation représentée, ce repère 34 est en relief, et il a en plan un contour triangulaire, avec sa pointe dirigée du côté suivant lequel s'étend le pêne 19.

Dans la forme de réalisation représentée, le joint de couvercle 16 n'est équipé d'un verrou 18 qu'à l'une de ses extrémités, et, à l'autre de celles-ci, il comporte en saillie à son dos un crochet 36, pour son engagement sur le retour 12 correspondant du corps 11.

Ce crochet 36 comporte un jambage 38, qui s'étend transversalement par rapport au bord transversal correspondant du joint de couvercle 16, et, en porte-à-faux le long du bord libre du jambage 38, un retour 39, qui s'étend perpendiculairement au jambage 38 du côté du bord transversal correspondant du joint de couvercle 16.

Préférentiellement, pour coopération avec un retour 12 du corps 11, le crochet 36 comporte une lamelle élastiquement déformable 28'.

Suivant des dispositions du même type que celles décrites précédemment, cette lamelle élastiquement déformable 28' s'étend à la faveur d'une échancrure 29' du retour 39, sensiblement suivant l'épaisseur de celui-ci, en ne présentant elle-même qu'une épaisseur moindre, et, pour porter contre un retour 12 du corps 11, elle présente transversalement en saillie un bourrelet 30' ayant en section transversale un profil triangulaire.

En pratique, pour son adaptation à des largeurs de couvercle 13 différentes, le joint de couvercle 16 comporte, échelonnés de place en place sur sa longueur, en saillie sur son dos, plusieurs crochets 36, avec, s'étendant transversalement sur toute sa largeur entre ces crochets 36, des zones de moindre résistance 40, qui, établies chacune entre deux crochets 36, au voisinage de l'un de ceux-ci, sont propres à son fractionnement.

Dans la forme de réalisation représentée, il y a ainsi trois crochets 36, respectivement 36A, 36B, 36C, tous identiques et ayant tous la même orientation.

Corollairement, il y a au voisinage des crochets 36B, 36C, deux zones de moindre résistance 40, respectivement 40B et 40C, matérialisées chacune par une saignée 41B, 41C diminuant localement à son dos l'épaisseur du joint de couvercle 16.

C'est par mesure de simplicité que les crochets 36 sont ici indifféremment désignés tantôt par leur référence générale 36, tantôt par leur référence spécifique 36A, 36B ou 36C.

Dans la forme de réalisation représentée, le joint de couvercle 16 comporte, encore, en saillie à son dos, à chacune de ses extrémités, au ras de ses bords transversaux, pour son engagement dans les retours 12 du corps 11, et, plus précisément, dans la gouttière de ces retours 12, une nervure transversale 42.

En pratique, il est associé une nervure transversale 42 à chacun des crochets 36.

Cette nervure transversale 42 s'étend parallèlement au jambage 38 d'un tel crochet 36, sur toute la largeur de ce jambage 38, du côté du retour 39 de celui-ci.

Mais, de hauteur moindre que le jambage 38, cette nervure transversale 42 laisse un espace entre elle et le retour 39 du jambage 38.

S'agissant plus précisément des crochets 36B, 36C, la nervure transversale 42 s'étend au ras de la saignée 41B, 41C correspondante.

Dans la forme de réalisation représentée, le joint de couvercle 16 comporte, encore, au moins localement, en saillie à son dos, une nervure longitudinale 44 de hauteur moindre que celle de ses nervures transversales 42.

En pratique, cette nervure longitudinale 44 s'étend sur toute la longueur du joint de couvercle 16, dans la zone médiane de celui-ci, en étant localement interrompue par un épanouissement circulaire 45 au voisinage de chacun des crochets 36.

Dans la forme de réalisation représentée, le joint de couvercle 16 comporte, enfin, transversalement en saillie à son dos, en association avec son verrou 18, à distance de son bord transversal correspondant, une nervure de guidage 46, pour contact avec le retour 12 correspondant du corps 11.

Cette nervure de guidage 46, qui s'étend parallèlement à la nervure transversale 42 correspondante, à distance de celle-ci, entre elle et le puits 24, a même longueur que cette nervure transversale 42, mais une hauteur supérieure.

Du côté de la nervure transversale 42, son bord libre est abattu par chanfrein 47.

En pratique, pour ne pas gêner l'engagement du joint de couvercle 16 sur un couvercle 13, tous les éléments que ce joint de couvercle 16 comporte en saillie à son dos, tels que puits 24, crochets 36, nervures 42 ou 46, ne s'étendent transversalement que dans sa zone médiane, en retrait par rapport à ses bords longitudinaux.

Pour sa pose, et tel que schématisé par une flèche F1 sur la figure 2, le joint de couvercle 16 suivant l'invention est engagé de biais par un crochet 36, et, par exemple, par son crochet 36A, sur le retour 12 correspondant du corps 11, en bout d'un couvercle 13 ou entre deux tronçons de ce couvercle 13, avec le pêne 19 de son verrou 18 dirigé vers ce retour 12, tel que schématisé en traits interrompus sur la figure 3, et tel que représenté en traits continus sur la figure 9.

Ce verrou est alors en position, stable, de déverrouillage.

Le joint de couvercle 16 est ensuite rabattu contre l'autre retour 12 du corps 11, tel que schématisé par la flèche F2 sur la figure 2.

Au terme de ce rabattement, qui est contrôlé par la nervure de guidage 46, en étant facilité par le chanfrein 47 de celle-ci, le verrou 18 est pivoté d'un demi-tour, tel que schématisé par la flèche F3 sur la figure 1, en agissant en conséquence sur sa tête de commande 21 à l'aide d'un tournevis non représenté.

Le verrou 18 passe alors de sa position de déverrouillage précédente à sa position, stable, de verrouillage, pour laquelle son pêne 19 est engagé sous le retour 12 correspondant du corps 11, tel que schématisé en traits interrompus sur la figure 5.

La languette élastiquement déformable 28 que comporte ce pêne 19 absorbe avantageusement tout jeu éventuel à ce niveau.

De même, au niveau du crochet 36A, la languette élastiquement déformable 28' que comporte également celui-ci absorbe avantageusement tout jeu éventuel.

Du fait de la nervure longitudinale 44, qui vient au mieux porter contre la tranche de la gouttière des retours 12 du corps 11, il subsiste, sous le joint de couvercle 16, de part et d'autre des éléments qu'il porte en saillie à son dos, tout l'espace nécessaire pour l'insertion d'un couvercle 13.

Le joint de couvercle 16 peut ainsi au moins localement recouvrir un tel couvercle 13.

Si désiré, le couvercle 13 peut être plus ou moins coulissé sous le joint de couvercle 16, pour ajuster sa position.

Inversement, le joint de couvercle 16 peut être plus ou moins coulissé sur le couvercle 13.

Pour la dépose du couvercle 13, il est procédé à la dépose préalable du joint de couvercle 16, suivant un processus inverse du précédent.

L'espace 48 alors dégagé par ce joint de couvercle 16, figure 2, permet à l'opérateur de passer un ou plusieurs doigts sous le couvercle 13 à déposer, pour l'application à celui-ci de l'effort d'extraction nécessaire.

Suivant la largeur du couvercle 13, il suffit de fractionner le joint de couvercle 16 à la faveur de l'une ou l'autre de ses zones de moindre résistance 40B, 40C, tel que schématisé en traits interrompus sur les lignes 10 et 11.

Bien entendu, la présente invention ne se limite pas à la forme de réalisation décrite et représentée mais englobe toute variante d'exécution.

En particulier, au lieu d'être monté rotatif, le verrou du joint de couvercle peut être monté coulissant.

En outre, comme indiqué, le domaine d'application de l'invention s'étend aussi bien au cas ou l'un et/ou l'autre des retours du corps de la goulotte, sur lesquels doit s'encliqueter un couvercle, sont portés par une cloison interne fixe ou amovible de ce corps.

## Revendications

1. Goulotte du genre comportant d'une part, un corps (11) à retours (12) dirigés l'un vers l'autre, et, d'autre part, un couvercle (13) à encliqueter sur ces retours (12), caractérisée en ce qu'elle comporte également un joint de couvercle (16), qui s'étend transversalement de l'un à l'autre des retours (12) du corps (11), pour recouvrement de l'extrémité du couvercle (13), et qui, à l'une de ses extrémités, au moins, est équipé d'un verrou (18) comportant un pêne (19), ledit verrou (18) étant monté mobile entre une position de verrouillage, pour laquelle le pêne (19) est engagé sous le retour (12) correspondant du corps (11), et une position de déverrouillage, pour laquelle le pêne (19) est à l'écart de ce retour (12).

2. Goulotte suivant la revendication 1 caractérisée en ce que le verrou (18) est monté rotatif sur le joint de couvercle (16) et présente à la surface de celui-ci une tête de commande (21) accessible à l'usager.

3. Goulotte suivant la revendication 2 caractérisée en ce que le verrou (18) est encliqueté par son fût dans un puits (24) qui fait saillie au dos du joint de couvercle (16).

4. Goulotte suivant l'une quelconque des revendications 2, 3, caractérisée en ce que le pêne (19) du verrou (18) est une simple plaquette qui s'étend radialement en porte-à-faux à compter de son fût (23).

5. Goulotte suivant l'une quelconque des revendications 1 à 4, caractérisée en ce que, pour coopération avec un retour (12) du corps (11), le pêne (19) du verrou (18) comporte une lamelle élastiquement déformable (28).

6. Goulotte suivant les revendications 4 et 5 prises conjointement, caractérisé en ce que la lamelle élastiquement déformable (28) s'étend à la faveur d'une échancrure (29) du pêne (19), sensiblement suivant l'épaisseur de celui-ci.

7. Goulotte suivant l'une quelconque des revendications 1 à 6, caractérisée en ce que, pour l'une au moins des positions du verrou (18), des moyens d'indexation sont prévus entre le verrou (18) et le joint de couvercle (16).

8. Goulotte suivant l'une quelconque des revendications 2 à 7, caractérisée en ce que la tête de commande (21) du verrou (18) porte un repère (34) à l'image de l'implantation du pêne (19).

9. Goulotte suivant l'une quelconque des revendications 1 à 8, caractérisée en ce que le joint de couvercle (16) n'est équipé d'un verrou (18) qu'à l'une de ses extrémités, et, à l'autre de celles-ci, il comporte en saillie à son dos un crochet (36) pour son engagement sur le retour (12) correspondant du corps (11).

10. Goulotte suivant la revendication 9, caractérisée en ce que, pour coopération avec un retour (12) du corps (11), le crochet (36) du joint de couvercle (16) comporte une lamelle élastiquement déformable (28').

11. Goulotte suivant la revendication 10, caractérisée en ce que, le crochet (36) étant formé d'un jambage (38) et d'un retour (39) en porte-à-faux, la lamelle élastiquement déformable (28') s'étend à la faveur d'une échancrure (29') de ce retour (39), sensiblement suivant l'épaisseur de celui-ci.

12. Goulotte suivant l'une quelconque des revendications 9 à 11, caractérisée en ce que, pour son adaptation à des largeurs de couvercle (13) différentes, le joint de couvercle (16) comporte, échelonnés de place en place sur sa longueur, en saillie à son dos, plusieurs crochets (36A, 36B, 36C), avec, s'étendant transversalement sur toute sa largeur, entre ces crochets (36A, 36B, 36C), des zones de moindre résistance (40), qui, établies chacune entre deux crochets (36A, 36B, 36C), sont propres à son fractionnement.

13. Goulotte suivant l'une quelconque des revendications 5, 11, caractérisée en ce que, pour porter contre un retour (12) du corps (11), une lamelle élastiquement déformable (28, 28') présente transversalement en saillie un bourrelet (30, 30').

14. Goulotte suivant l'une quelconque des revendications 1 à 13, caractérisée en ce que, les retours (12) du corps (11) étant globalement conformés en gouttière, le joint de couvercle (16) comporte en saillie à son dos, à chacune de ses extrémités, pour engagement dans tel retour (12), une nervure transversale (42).

15. Goulotte suivant les revendications 12 et 14, prises conjointement, caractérisée en ce qu'il est associé une nervure transversale (42) à chacun des crochets (36A, 36B, 36C) du joint de couvercle (16).

16. Goulotte suivant la revendication 14, caractérisée en ce que, pour limitation de son engagement dans les retours (12) du corps (11), le joint de couvercle (16) comporte, au moins localement, en saillie à son dos, une nervure longitudinale (44) de hauteur moindre que celle de ses nervures transversales (42).

17. Goulotte suivant l'une quelconque des revendications 1 à 16, caractérisée en ce que tous les éléments que le joint de couvercle (16) comporte en saillie à son dos, tels que puits (24), crochets (36), nervures (42, 46), ne s'étendent transversalement que dans la zone médiane, en retrait par rapport à ses bords longitudinaux.

## Patentansprüche

1. Rinne, umfassend einerseits einen Körper (11) mit aufeinander zu gerichteten Abwinklungen (12) und andrerseits einen auf diesen Abwinklungen (12) einzurastenden Deckel (13), dadurch gekennzeichnet, daß sie außerdem einen Dekkelverbinder (16) besitzt, der sich quer von einer der Abwinklungen (12) des Körpers (11) zur anderen zum Abdecken des Endes des Deckels (13) erstreckt und der mindestens an einem seiner Enden mit einer Verriegelungseinrichtung (18) versehen ist, die einen Riegel (19) aufweist und zwischen einer Verriegelungsstellung, in der der Riegel (19) unter die entsprechende Abwinklung des Körpers (11) eingreift, und einer Entriegelungsstellung beweglich montiert ist, in der der Riegel (19) in einer Entfernung von dieser Abwinklung (12) ist.

2. Rinne nach Anspruch 1, dadurch gekennzeichnet, daß die Verriegelungseinrichtung (18) auf dem Deckelverbinder (16) drehbar montiert ist und auf dessen Oberfläche einen für den Benutzer zugänglichen Betätigungskopf (21) aufweist.

3. Rinne nach Anspruch 2, dadurch gekennzeichnet, daß die Verriegelungseinrichtung (18) mit ihrem Schaft in einen Schacht (24) eingerastet ist, der auf der Rückseite des Deckelverbinders (16) vorsteht.

4. Rinne nach einem der Ansprüche 2, 3, dadurch gekennzeichnet, daß der Riegel (19) der Verriegelungseinrichtung (18) eine einfache Platte ist, die sich radial auskragend von deren Schaft (23) aus erstreckt.

5. Rinne nach einem der Ansprüche 1 bis 4, dadurch gekennzeichnet, daß der Riegel (19) der Verriegelungseinrichtung (18) zum Zusammenwirken mit einer Abwinklung (12) des Körpers (11) eine elastisch verformbare Lamelle (28) aufweist.

6. Rinne nach den Ansprüchen 4 und 5 zusammen, dadurch gekennzeichnet, daß die elastisch verformbare Lamelle (28) sich in einem Ausschnitt (29) des Riegels (19) im wesentlichen in dessen Dicke erstreckt.

7. Rinne nach einem der Ansprüche 1 bis 6, dadurch gekennzeichnet, daß für mindestens eine der Stellungen der Verriegelungseinrichtung (18) Rastmittel zwischen der Verriegelungseinrichtung (18) und dem Deckelverbinder (16) vorgesehen sind.

8. Rinne nach einem der Ansprüche 2 bis 7, dadurch gekennzeichnet, daß der Betätigungskopf (21) der Verriegelungseinrichtung (18) eine Marke (34) nach dem Abbild der Anordnung des Riegels (19) trägt.

9. Rinne nach einem der Ansprüche 1 bis 8, dadurch gekennzeichnet, daß der Deckelverbinder (16) nur an einem seiner Enden mit einer Verriegelungseinrichtung (18) ausgerüstet ist und am anderen dieser Enden auf seiner Rückseite vorstehend einen Haken (36) für sein Eingreifen an der entsprechenden Abwinklung (12) des Körpers (11) aufweist.

10. Rinne nach Anspruch 9, dadurch gekennzeichnet, daß der Haken (36) des Deckelverbinders (16) zum Zusammenwirken mit einer Abwinklung (12) des Körpers (11) eine elastisch verformbare Lamelle (28') aufweist.

11. Rinne nach Anspruch 10, dadurch gekennzeichnet, daß der Haken (36) von einem Fuß (38) und einer auskragenden Abwinklung (39) gebildet ist und daß die elastisch verformbare Lamelle (28') sich in einem Ausschnitt (29') dieser Abwinklung (39) im wesentlichen in deren Dicke erstreckt.

12. Rinne nach einem der Ansprüche 9 bis 11, dadurch gekennzeichnet, daß der Deckelverbinder (16) für seine Anpassung an verschiedene Breiten des Deckels (13), von Stelle zu Stelle auf seiner Länge gestaffelt, mehrere auf seiner Rückseite vorstehende Haken (36A, 36B, 36C) aufweist, wobei sich zwischen diesen Haken (36A, 36B, 36C) quer auf seiner ganzen Breite Bereiche (40) geringerer Festigkeit erstrekken, die jeweils zwischen zwei Haken (36A, 36B, 36C) vorgesehen sind und für sein Brechen geeignet sind.

13. Rinne nach einem der Ansprüche 5, 11, dadurch gekennzeichnet, daß eine elastisch verformbare Lamelle (28, 28') zum Aufliegen auf einer Abwinklung (12) des Körpers (11) in Querrichtung vorstehend einen Wulst (30, 30') aufweist.

14. Rinne nach einem der Ansprüche 1 bis 13, dadurch gekennzeichnet, daß, wenn die Abwinklungen (12) des Körpers (11) insgesamt rinnenförmig ausgebildet sind, der Deckelverbinder (16) auf seiner Rückseite vorstehend an jedem seiner Enden zum Eingreifen in eine solche Abwinklung (12) eine Querrippe (42) aufweist.

15. Rinne nach den Ansprüche 12 und 14 zusammen, dadurch gekennzeichnet, daß eine Querrippe (42) jedem der Haken (36A,36B, 36C) des Deckelverbinders (16) zugeordnet ist.

16. Rinne nach Anspruch 14, dadurch gekennzeichnet, daß der Deckelverbinder (16) zur Begrenzung seines Eingreifens in die Abwinklungen (12) des Körpers (11) mindestens örtlich auf seiner Rückseite vorstehend eine Längsrippe (44) aufweist, deren Höhe kleiner als die seiner Querrippen (42) ist.

17. Rinne nach einem der Ansprüche 1 bis 16, dadurch gekennzeichnet, daß alle Elemente, die der Deckelverbinder (16) auf seiner Rückseite vorstehend aufweist, wie Schächte (24), Haken (36), Rippen (42, 46), sich quer nur im mittleren Bereich bezüglich seiner Längsränder zurückversetzt erstrecken.

## Claims

1. A ducting of the type comprising on the one hand a body (11) with flange portions (12) which are directed towards each other and on the other hand a cover (13) to be latched on to said flange portions (12), characterised in that it also comprises a cover join (16) which extends transversely from one of the flange portions (12) of the body (11) to the other to cover the end of the cover (13) and which at one of its ends at least is provided with a locking member (18) comprising a latch portion (19), said locking member (18) being mounted movably between a locking position in which the latch portion (19) is engaged under the corresponding flange portion (12) of the body (11) and an unlocking position in which the latch portion (19) is spaced from said flange portion (12).

2. A ducting according to claim 1 characterised in that the locking member (18) is mounted rotatably on the cover join (16) and has at the surface thereof a control head (21) which is accessible to the user.

3. A ducting according to claim 2 characterised in that the locking member (18) is latched by means of its shaft in a well portion (24) which projects at the back of the cover join (16).

4. A ducting according to either one of claims 2 and 3 characterised in that the latch portion (19) of the locking member (18) is a simple plate portion which extends radially in cantilever relationship from its shaft (23).

5. A ducting according to any one of claims 1 to 4 characterised in that, for co-operation with a flange portion (12) of the body (11), the latch portion (19) of the locking member (18) comprises an elastically deformable blade portion (28).

6. A ducting according to claims 4 and 5 in combination characterised in that the elastically deformable blade portion (28) extends by way of a notch (29) in the latch portion (19), substantially in accordance with the thickness thereof.

7. A ducting according to any one of claims 1 to 6 characterised in that, for one at least of the positions of the locking member (18), indexing means are provided between the locking member (18) and the cover join (16).

8. A ducting according to any one of claims 2 to 7 characterised in that the control head (21) of the locking member (18) carries an indicator mark (34) showing the positioning of the latch portion (19).

9. A ducting according to any one of claims 1 to 8 characterised in that the cover join (16) is provided with a locking member (18) only at one of its ends and at the other of its ends it comprises in projecting relationship at its back a hook (36) for engagement thereof on the corresponding flange portion (12) of the body (11).

10. A ducting according to claim 9 characterised in that for cooperating with a flange portion (12) of the body (11) the hook (36) of the cover join (16) comprises an elastically deformable blade portion (28').

11. A ducting according to claim 10 characterised in that, the hook (36) being formed by a leg portion (38) and a cantilevered flange portion (39), the elastically deformable blade portion (28') extends by way of a notch (29') in said flange portion (39), substantially in accordance with the thickness thereof.

12. A ducting according to any one of claims 9 to 11 characterised in that, for adaptation thereof to different widths of cover (13), the cover join (16) comprises in projecting relationship at its back and arranged at spaced locations over its length a plurality of hooks (36A, 36B, 36C) with, extending transversely over its entire width, between said hooks (36A, 36B, 36C), regions (40) of less resistance which, each provided between two hooks (36A, 36B, 36C), are adapted to divide up the cover join.

13. A ducting according to either one of claims 5 and 11 characterised in that, to bear against a flange portion (12) of the cover (11), an elastically deformable blade portion (28, 28') is transversely provided in projecting relationship with a ridge portion (30, 30').

14. A ducting according to any one of claims 1 to 13 characterised in that, the flange portions (12) of the body (11) being generally shaped in a gutter-like configuration, the cover join (16) comprises a transverse rib (42) in projecting relationship at its back, at each of its ends, for engagement into such a flange portion (12).

15. A ducting according to claims 12 and 14 in combination characterised in that a transverse rib (42) is associated with each of the hooks (36A, 36B, 36C) of the cover join (16).

16. A ducting according to claim 14 characterised in that, for limiting its engagement into the flange portions (12) of the body (11), the cover join (16) comprises at least locally in projecting relationship at its back a longitudinal rib (44) of a height which is less than that of its transverse ribs (42).

17. A ducting according to any one of claims 1 to 16 characterised in that all the elements that the cover join (16) comprises in projecting relationship at its back such as well portions (24), hooks (36) and ribs (42, 46) extend transversely only in the central region, set back with respect to its longitudinal edges.
